# EUROPÄISCHE PATENTSCHRIFT

(11) **EP 1 747 997 B1**
(45) Veröffentlichungstag und Bekanntmachung des Hinweises auf die Patenterteilung: **17.09.2008**
(21) Anmeldenummer: 05016444.1
(22) Anmeldetag: 28.07.2005
(51) Int. Cl.: B65B 55/02, B65B 55/06, A23C 3/027, A23L 2/46, B65B 3/04

(54) **Vorrichtung und Verfahren zum Abfüllen**
Apparatus and method for filling
Dispositif et procédé de remplissage

(43) Veröffentlichungstag der Anmeldung: 31.01.2007
(60) Teilanmeldung: 08006000.7
(73) Patentinhaber: INDAG Gesellschaft für Industriebedarf mbH & Co. Betriebs KG, 69214 Eppelheim (DE)
(72) Erfinder:
(74) Vertreter: Grünecker, Kinkeldey, Stockmair & Schwanhäusser Anwaltssozietät

(56) Entgegenhaltungen:
- EP-A- 0 337 010
- EP-A- 0 661 208
- GB-A- 993 003
- US-A1- 2004 131 735
- PATENT ABSTRACTS OF JAPAN Bd. 2002, Nr. 04, 4. August 2002 (2002-08-04) -& JP 2001 354213 A (DAINIPPON PRINTING CO LTD), 25. Dezember 2001 (2001-12-25)

## Beschreibung

Die Erfindung betrifft eine Vorrichtung und ein Verfahren zum Abfüllen von heißem Füllgut nach den Oberbegriffen der Ansprüche 1 und 11.

In der Getränkeindustrie ist es bekannt, verderbliche Getränke heiß abzufüllen, damit die Getränke beim Abfüllen eine möglichst niedrige Keimbelastung aufweisen. Weiter sind Verpackungen bekannt, die mit einem Verpackungsverschluss, wie etwa einer Verschlusskappe, nach dem Befüllen verschlossen werden können. Dadurch wird das Getränk in der Verpackung, hermetisch verschlossen verpackt, so dass eine möglichst lange Haltbarkeitsdauer erreicht werden kann.

Als Getränkeverpackungen sind beispielsweise Folienbeutel bekannt, die sich durch ihr geringes Eigengewicht auszeichnen.

Eine gattungsgemäße Vorrichtung und ein gattunsgemäßes Verfahren sind aus der US 2004/0131735 A1 bekannt.

Aufgabe der vorliegenden Erfindung ist es, die Keimfreiheit des Verpackungsinneren in einem möglichst hohen Maße zu gewährleisten, um so noch längere Mindesthaltbarkeitsdauer zu erzielen.

Diese Aufgabe wird mit einer Vorrichtung nach Anspruch 1 und einem Verfahren nach Anspruch 11 gelöst. Vorteilhafte Ausführungsformen sind in den Unteransprüchen offenbart.

Bei der Vorrichtung ist eine Schwenkeinrichtung vorgesehen, mit der die Verpackung so verschwenkt werden kann, dass die Innenseite des Verpackungsverschlusses mit dem heißen Füllgut in Kontakt kommt. Dadurch, dass das Füllgut nach dem Abfüllen noch heiß ist, kann es bei dem Verpackungsverschluss, der durch das Verschwenken mit dem Füllgut in der Verpackung in Kontakt kommen kann, eine keimtötende Wirkung entfalten.

Zum Befüllen der Verpackung sind verschiedene Möglichkeiten gegeben. Zum einen kann durch einen bereits in die Verpackung eingesetzten (z. B. eingeschweißten) Ausguss das Füllgut eingebracht werden. Auch kann das Füllgut durch eine Öffnung der Verpackung eingefüllt werden und diese Öffnung anschließend mit dem Ausguss verschlossen werden. Dabei kann eine Verschlusskappe bereits auf dem Ausguss aufgesetzt sein oder auch erst später aufgesetzt werden. Auch ist es möglich die Verpackung durch eine Öffnung hindurch zu befüllen, die neben dem Verpackungsverschluss oder neben der Position eines noch einzusetzenden Verpackungsverschlusses liegt. Die Abfülleinrichtungen können je nach Vorgehensweise entsprechend ausgebildet sein.

Auch zum Verschließen gibt es verschiedene Möglichkeiten. Es kann eine Verschlusskappe auf einen Ausguss aufgesetzt werden. Es kann ein (offener oder verschlossener) Ausguss in die Verpackung eingesetzt werden, um so die Öffnung für den Ausguss zu verschließen. Auch kann eine Öffnung in der Verpackung an einer anderen Stelle, als die des Ausgusses verschlossen werden. Die Verschließeinrichtung ist jeweils entsprechend ausgebildet.

Für eine gute Keimabtötung ist es von Vorteil, wenn das Füllgut eine gewisse Zeit lang mit dem Verpackungsverschluss in Kontakt bleibt. Daher ist erfindungsgemäß vorgesehen, dass eine Einrichtung wie etwa eine Förderfläche vorgesehen ist, mit der die Verpackungen in der verschwenkten Position beibehalten werden können, z. B. indem sie gefördert werden.

Um einen guten Kontakt zwischen Füllgut und Verpackungsverschluss zu erreichen ist eine Verschwenkung um mehr als 30°, 45°, 60°, 75°, 90°, 100°, 120°, 140°, 150°,vorteilhaft, da dann Luft oder sonstiges Gas, dass sich bei dem Verpackungsverschluss befindet, verdrängt wird.

Vorteilhaft ist es weiterhin, wenn die Schwenkeinrichtung eine Haltegabel umfasst. Dies erlaubt beispielsweise bei Folienbeuteln, dass die Verpackung etwas zwischen den Haltegabeln hervorsteht und so von einem darunter angeordneten Förderband erfasst werden kann, um die Verpackung so von der Haltegabel abzuziehen.

Eine Ausführungsform der Vorrichtung und des Verfahrens soll anhand der beiliegenden Figuren erläutert werden. Dabei zeigt:
- Figur 1: Eine dreidimensionale schematische Darstellung einer Vorrichtung;
- Figur 2: eine zweidimensionale schematische Schnittzeichnung;
- Figur 3: eine dreidimensionale schematische Darstellung eines Folienbeutels in der Vorrichtung.

Im Folgenden sollen hier beispielhaft Folienbeutel, wie etwa Standbodenbeutel, exemplarisch für Verpackungen besprochen werden.

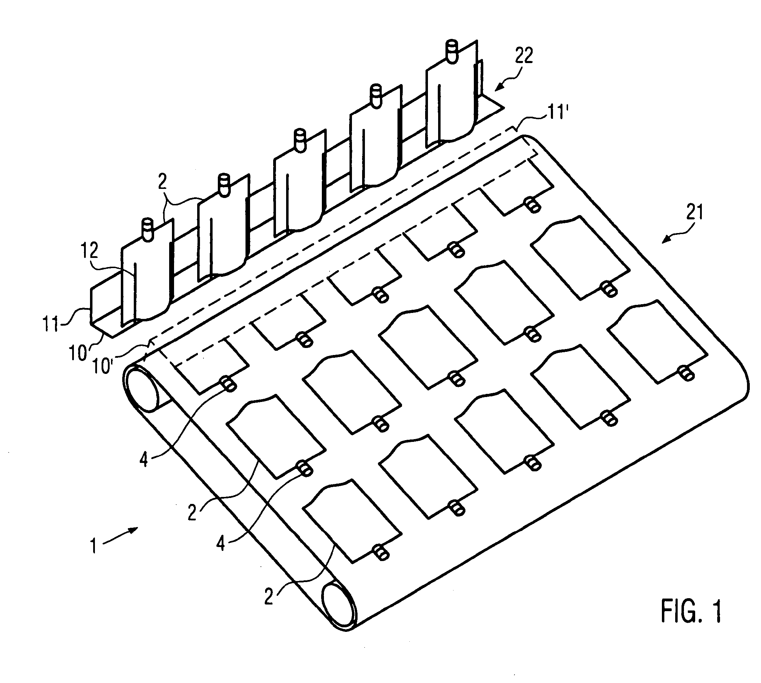

In Figur 1 ist eine Schwenkeinrichtung 22 zum Verschwenken von Folienbeuteln 2 dargestellt. Nicht dargestellt ist eine Abfüllanlage, die bei der Vorrichtung in Fig. 1 beispielsweise links der Schwenkvorrichtung 22 angeordnet sein kann und von der die Folienbeutel 2 auf die Verschwenkeinrichtung 22 übergeben werden können.

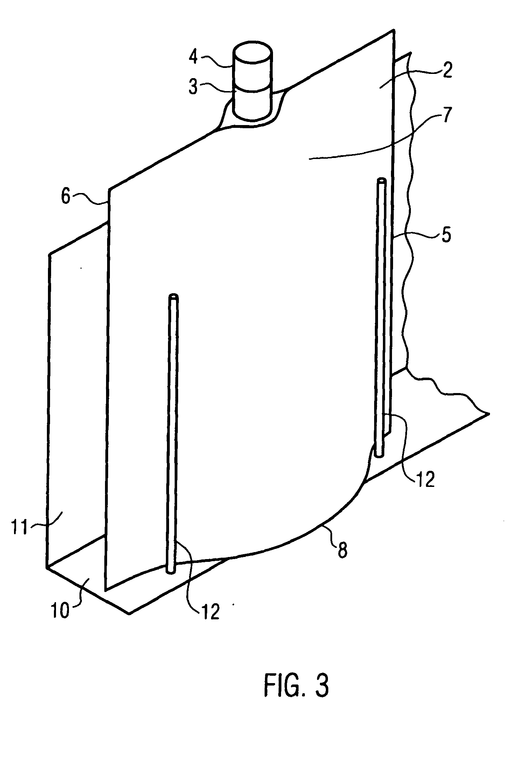

Die Folienbeutel 2 weisen an ihrem oberen Ende einen Ausguss 3, auch Tülle oder Spout genannt, auf, der mit einer Verschlusskappe 4 verschlossen ist (siehe Figur 3). Nach Befüllen der Folienbeutel 2 mit dem Füllgut werden die Verschlusskappen 4 aufgesetzt, um die Folienbeutel 2 zu verschließen. Die Folienbeutel 2 befinden sich dabei auf einer Verschwenkeinrichtung 22 oder werden auf diese anschließend aufgebracht.

Auch ist es möglich, dass der Ausguss 3 mit bereits aufgesetzter oder später aufzusetzender Verschlusskappe 4 in den Folienbeutel 2 eingeschweißt wird, nachdem der Folienbeutel 2 befüllt wurde. Durch das Einschweißen des Ausgusses 3 wird die für den Ausguss 3 vorgesehene Öffnung des Folienbeutels 2 verschlossen. Falls beispielsweise die gesamte obere Kante des Folienbeutels 2 offen ist, kann durch diese Öffnung das Füllgut in den Folienbeutel 2 eingebracht werden. Anschließend wird ein Ausguss 3 an die entsprechende Position (s. Fig. 3) gebracht und das obere Ende des Folienbeutels 2 verschweißt, wobei der Ausguss 3 dann eingeschweißt wird.

Eine weitere Möglichkeit besteht darin, den Folienbeutel 2 unabhängig von dem Ausguss 3 und der Verschlusskappe 4 zu füllen. Dazu kann an der Oberkante oder auch an einer anderen Stelle ein Öffnung vorhanden sein, die nach dem Befüllen durch Verschweißen verschlossen wird. Dies kann sowohl mit als auch ohne eingeschweißten Ausguss 3 geschehen.

Jegliche Art des Verschließens kann geschehen bevor die Folienbeutel 2 auf die Verschwenkeinrichtung aufgesetzt werden oder auch erst wenn sie bereits darauf abgestellt sind. Demgemäß befindet sich die Verschließeinrichtung dann bei der Verschwenkeinrichtung bzw. die Verschwenkeinrichtung bildet einen Teil der Verschließeinrichtung.

Die Verschwenkeinrichtung 22 weist ein Bodenteil 10 auf, auf dem die Folienbeutel 2 stehen können. Weiterhin hat die Verschwenkeinrichtung 22 ein Rückenteil 11, dass die Folienbeutel 2 stützt. Auf der dem Rückenteil 11 gegenüberliegenden Seite sind Haltegabeln 12 vorgesehen.

Die Schwenkeinrichtung 22 kann in Figur 1 nach rechts unten verschwenkt werden. Die Endposition ist in Figur 1 gestrichelt dargestellt. Die Folienbeutel 2 befinden sich in dieser verschwenkten Position über einem Förderband 21. Auf dem Förderband 21 können die Folienbeutel 2 herabgefördert werden. Durch das Verschwenken tritt das heiße Füllgut in Kontakt mit dem Inneren der Verschlusskappe 4, die sich dann am unteren Ende des Folienbeutels 2 befindet. Durch den Transport auf dem Förderband 21 verbleibt der Beutel eine gewisse Zeit lang in dieser Position, sodass das heiße Füllgut genügend Zeit hat, auf das Innere der Verschlusskappe 4 durch die Temperatureinwirkung eine keimtötende Wirkung auszuüben.

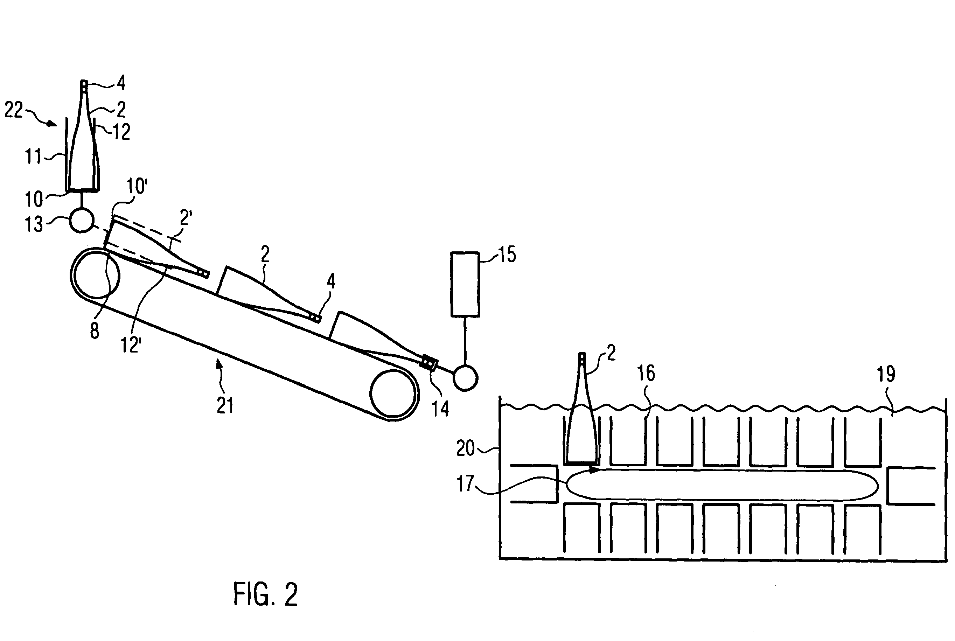

In Figur 2 ist dargestellt, wie die Verschwenkeinrichtung 22 um eine Schwenkachse 13 geschwenkt werden kann. Auch eine Schwenkung nicht um eine feste Achse, sondem mit einem Gelenkgestell oder Ähnliches ist möglich.

In Figur 2 ist zu erkennen, wie in der verschwenkten Position (siehe gestrichelte Darstellung in Figur 2) ein Folienbeutel 2' mit dem Förderband 21 an einer Stelle 8 in Kontakt kommt. An der Stelle 8 steht der Folienbeutel 2' zwischen den Zinken der Haltegabel 12 hervor (siehe auch Figur 3). Durch diesen Kontakt kann das Förderband 21 den Folienbeutel 2' aus der Haltegabel 12' herausziehen. Dadurch wird der Abtransport der Folienbeutel 2' von der Schwenkeinrichtung 22 gewährleistet.

Am unteren Ende des Förderbandes 21 ist eine Transfereinrichtung 15 mit einer Klammer 14 dargestellt. Mit dieser Transfereinrichtung 15 können die Folienbeutel 2 in ein Kühlbad 20 überführt werden. In dem Kühlbad 20 befindet sich eine Kühlflüssigkeit 19, wie etwa Wasser. In der Kühlflüssigkeit 19 läuft ein Förderer 17 um, der Aufnahmen 16 aufweist, in die die Folienbeutel 2 eingesetzt werden können. Durch den Transport durch das Kühlbad 20 werden die Folienbeutel 2 und damit das Getränk im Inneren soweit abgekühlt, dass die Folienbeutel 2 verpackt werden können.

In Figur 3 ist ein Folienbeutel 2 dargestellt, der an seinem oberen Ende einen eingeschweißten Ausguss 3 aufweist. Der Ausguss 3 ist mit einer Verschlusskappe 4 verschlossen. Der Folienbeutel 2 weist seitliche Ränder 5 und 6 auf, an denen Schweißnähte vorliegen. Hier sind die Seitenfolien (von denen die Seitenfolie 7 sichtbar ist) miteinander verschweißt.

Wie in Figur 3 zu erkennen, steht der Folienbeutel 2 an seinem unteren Ende im Bereich 8 über die Grundplatte 10 hervor.

Bei dem erfindungsgemäßen Verfahren werden Folienbeutel 2 befüllt und anschließend mit einer Verschlusskappe 4, durch Einschweißen eines Ausgusses 3 oder durch Verschweißen einer separaten Füllöffnung verschlossen. Danach werden die Folienbeutel 2 auf eine Verschwenkeinrichtung 22 transferiert. Hier stehen die Folienbeutel 2 auf einem Bodenteil 10 und werden von einem Rückenteil 11 gestützt. Auf der Vorderseite der Verschwenkeinrichtung 22 sind Haltegabeln 12 vorgesehen, wobei der Folienbeutel 2 mit der Stelle 8 zwischen den Haltegabeln 12 hervorsteht. Durch Verschwenken der Verschwenkeinrichtung 22 um beispielsweise 100° bis 150° befindet sich die Verschlusskappe 4 am unteren Ende des Folienbeutels. Die Innenseite der Verschlusskappe 4 kommt daher mit dem heißen Füllgut in dem Folienbeutel 2 in Kontakt. Dadurch werden eventuelle Keime auf der Innenseite der Verschlusskappe 4 zumindest teilweise reduziert, da das Füllgut noch genügend heiß ist.

Der Winkel, um den verschwenkt wird, kann auch größer oder kleiner sein, solange die Innenseite der Verschlusskappe 4 mit dem noch heißen Füllgut in Kontakt kommt. Bei entsprechender Befüllung des Folienbeutels kann auch ein Winkel von mindestens 30°, 45°, 60°, 75° oder 90° geeignet sein. Große Verschwenkwinkel führen dazu, dass Keime auf der Innenseite der Verschlusskappe 4 abgetötet werden. Die obere Grenze für den Schwenkwinkel liegt bei 160°.

Durch das Verschwenken wird auch eine keimtötende Wirkung auf die Innenseite des Ausgusses 3 ausgeübt.

Das Förderband 21 kann durch den Kontakt an der Stelle 8 den Folienbeutel 2 aus der Haltegabel 12 herausziehen. Der Förderer 21 transportiert den Folienbeutel 2 dann in dieser verschwenkten Position abwärts. Während dieser Zeit wird die Keimabtötungswirkung aufrechterhalten. Mit einer Klammer 14 einer Transferrichtung 15 wird ein Folienbeutel 2 dann in ein Kühlbad 20 transferiert. In dem Kühlbad 20 sind Aufnahmen 16 vorgesehen, die an einem Förderer 17 umlaufen, um so die Folienbeutel 2 in einer Kühlflüssigkeit abzukühlen.

Die gesamte Vorrichtung arbeitet taktweise, d. h., dass in einem Takt die Verschwenkeinrichtung 22 aus der oberen Position in die Verschwenkposition und wieder zurückbewegt wird. Auch der Förderer 21, die Transfereinrichtung 15 und vorzugsweise auch der Förderer 17 des Kühlbads 20 arbeiten entsprechend taktweise.

Die Vorrichtung weist mehrere Spuren auf, in denen mehrere Folienbeutel 2 nebeneinander gleichzeitig behandelt werden können. Dadurch können höhere Durchsatzraten erzielt werden.

## Patentansprüche

1. Vorrichtung zum Abfüllen mit:
einer Abfülleinrichtung zum Befüllen von Verpackungen (2) mit heißem Füllgut,
einer Verschließeinrichtung zum Verschließen der Verpackung (2), wobei die Verpackung (2) einen Verpackungsverschluss (3, 4) zum Öffnen der Verpackung (2) aufweist und
einer Schwenkeinrichtung (22) zum Verschwenken der Verpackung (2), so dass der Verpackungsverschluss (3, 4) mit heißem Füllgut in Kontakt kommt,
**dadurch gekennzeichnet, dass**
der Schwenkwinkel nicht mehr als 160° beträgt und dass
eine Einrichtung (21) wie etwa eine Förderfläche (21) vorgesehen ist, mit der die Verpackung (2) in der verschwenkten Position beibehalten wird, beispielsweise indem sie gefördert wird.

2. Vorrichtung nach Anspruch 1, **dadurch gekennzeichnet, dass** die Verschließeinrichtung zum Verschließen eine Verschlusskappe (4) auf die Verpackung (2) aufsetzten kann.

3. Vorrichtung nach einem der Ansprüche 1 oder 2, **dadurch gekennzeichnet, dass** die Verschließeinrichtung eine neben dem Verpackungsverschluss (3, 4) liegende Öffnung verschließt, beispielsweise durch Verschweißen von Folienmaterial der Verpackung (2).

4. Vorrichtung nach einem der Ansprüche 1 bis 3, **dadurch gekennzeichnet, dass** die Verschließeinrichtung einen Verpackungsverschluss (3, 4) oder einen Teil (3) davon in eine Öffnung der Verpackung (2) einsetzt, beispielsweise durch Verschweißen.

5. Vorrichtung nach einem der Ansprüche 1 bis 4, **dadurch gekennzeichnet, dass** die Abfülleinrichtung zum Befüllen der Verpackung (2) durch einen Teil des Verpackungsverschlusses (3) hindurch ausgebildet ist.

6. Vorrichtung nach einem der Ansprüche 1 bis 5, **dadurch gekennzeichnet, dass** die Abfülleinrichtung zum Befüllen der Verpackung (2) durch eine neben dem Verpackungsverschluss (3, 4) oder an der vorgesehenen Position des Verpackungsverschlusses (3, 4) liegende Öffnung ausgebildet ist.

7. Vorrichtung nach einem der Ansprüche 1 - 6, **dadurch gekennzeichnet, dass** die Einrichtung (21) ein Förderband umfasst.

8. Vorrichtung nach einem der Ansprüche 1 bis 7, **dadurch gekennzeichnet, dass** die Schwenkeinrichtung (22) die Verpackung (2) um mindestens 30°, 45°, 60°, 75°, 90°, 100°, 120°, 140° oder 150° verschwenken kann.

9. Vorrichtung nach einem der Ansprüche 1 bis 8, **dadurch gekennzeichnet, dass** die Schwenkeinrichtung (22) eine Haltegabel (12) umfasst.

10. Vorrichtung nach Anspruch 9, **dadurch gekennzeichnet, dass** die Haltegabel (12) in der verschwenkten Position unterhalb der Verpackung (2) ist.

11. Verfahren zum Abfüllen, bei dem:
heißes Füllgut in eine Verpackung (2) abgefüllt wird,
die Verpackung (2) verschlossen wird,
wobei die Verpackung (2) einen Verpackungsverschluss (3, 4) aufweist und
die Verpackung (4) verschwenkt wird, so dass der Verpackungsverschluss (3, 4) mit dem heißem Füllgut in Kontakt kommt,
**dadurch gekennzeichnet, dass**
der Schwenkwinkel nicht mehr als 160° beträgt und dass
die Verpackung (2) nach dem Verschwenken in dieser Orientierung eine Zeit lang beibehalten wird und dabei beispielsweise gefördert wird.

12. Verfahren nach Anspruch 11, **dadurch gekennzeichnet, dass** zum Verschließen eine Verschlusskappe (4) auf die Verpackung (2) aufgesetzt wird.

13. Verfahren nach einem der Ansprüche 11 oder 12, **dadurch gekennzeichnet, dass** zum Verschließen eine neben dem Verpackungsverschluss (3, 4) liegende Öffnung verschlossen wird.

14. Verfahren nach einem der Ansprüche 11 bis 13, **dadurch gekennzeichnet, dass** zum Verschließen ein Verpackungsverschluss (3, 4) oder ein Teil (3) davon in eine Öffnung der Verpackung eingesetzt wird, beispielsweise durch Verschweißen.

15. Verfahren nach einem der Ansprüche 11 bis 14, **dadurch gekennzeichnet, dass** das Füllgut durch einen Teil (3) des Verpackungsverschlusses hindurch abgefüllt wird.

16. Verfahren nach einem der Ansprüche 11 bis 15, **dadurch gekennzeichnet, dass** das Füllgut durch eine neben dem Verpackungsverschluss (3, 4) liegende oder an der vorgesehenen Stelle des Verpackungsverschlusses (3, 4) liegende Öffnung hindurch abgefüllt wird.

17. Verfahren nach einem der Ansprüche 11 bis 16, **dadurch gekennzeichnet, dass** die Verpackung (2) um mindestens 30°, 45°, 60°, 75°, 90°, 100°, 120°, 140°, oder 150°, verschwenkt wird.

18. Verfahren nach einem der Ansprüche 11 bis 17, **dadurch gekennzeichnet, dass** die Verpackung (2) so verschwenkt wird, dass sie auf einer Haltegabel (12) aufliegt.

19. Verfahren nach Anspruch 18, **dadurch gekennzeichnet, dass** sich nach dem Verschwenken ein Teil der Verpackung (2) unterhalb der Haltegabel (12) befindet, der mit einem abtransportierenden Förderband (21) in Kontakt kommt.

## Claims

1. Filling apparatus with:
a filling device for filling packages (2) with a hot filling,
a sealing device for sealing the package (2), wherein the package (2) has a package seal (3, 4) for opening the package (2) and
a swivelling arrangement (22) for swivelling the package (2) so that the package seal (3, 4) comes into contact with the hot filling.
**characterised in that**
the swivel angle is not more than 160° and that
a device (21), such as a conveyor surface (21) is provided, with which the package (2) is kept in the swivelled position, for example, by means of being conveyed.

2. Apparatus according to Claim 1, **characterised in that** the sealing device can place a sealing cap (4) on to the package (2) for sealing.

3. Apparatus according to one of the Claims 1 or 2, **characterised in that** the sealing device seals an opening located next to the package seal (3, 4), for example, by welding together the foil material of the package (2).

4. Apparatus according to one of the Claims 1 to 3, **characterised in that** the sealing device inserts a package seal (3, 4) or a portion (3) thereof into an opening of the package (2), for example, by welding.

5. Apparatus according to one of the Claims 1 to 4, **characterised in that** the filling device is adapted for filling the package (2) through a portion of the package seal (3).

6. Apparatus according to one of the Claims 1 to 5, **characterised in that** the filling device is adapted for filling the package (2) through an opening lying next to the package seal (3, 4) or at the position provided for the package seal (3, 4).

7. Apparatus according to one of the Claims 1 to 6, **characterised in that** the device (21) comprises a conveyor belt.

8. Apparatus according to one of the Claims 1 to 7, **characterised in that** the swivelling arrangement (22) can swivel the package (2) by at least 30°, 45°, 60°, 75°, 90°, 100°, 120°, 140° or 150°.

9. Apparatus according to one of the Claims 1 to 8, **characterised in that** the swivelling arrangement (22) comprises a fixing bracket (12).

10. Apparatus according to Claim 9, **characterised in that** the fixing bracket (12) is below the package (2) in the swivelled position.

11. Filling method in which:
hot filling is filled into a package (2),
the package (2) is closed,
wherein the package (2) has a package seal (3, 4) and
the package (2) is swivelled so that the package seal (3, 4) comes into contact with the hot filling,
**characterised in that**
the swivel angle is not more than 160° and that
after being swivelled, the package (2) is kept in this orientation for a length of time and is, for example, conveyed at the same time.

12. Method according to Claim 11, **characterised in that** a sealing cap (4) is placed on to the package (2) for sealing.

13. Method according to one of the Claims 11 or 12, **characterised in that** an opening located next to the package seal (3, 4) is closed in order to seal the package.

14. Method according to one of the Claims 11 to 13, **characterised in that** a package seal (3, 4) or a portion (3) thereof is inserted into an opening of the package, for example, by welding, in order to seal the package.

15. Method according to one of the Claims 11 to 14, **characterised in that** the filling is filled into the package through a portion (3) of the package seal.

16. Method according to one of the Claims 11 to 15, **characterised in that** the filling is filled into the package through an opening located next to the package seal (3, 4) or at the position provided for the package seal (3, 4).

17. Method according to one of the Claims 11 to 16, **characterised in that** the package is swivelled by at least 30°, 45°, 60°, 75°, 90°, 100°, 120°, 140° or 150°.

18. Method according to one of the Claims 11 to 17, **characterised in that** the package (2) is swivelled in such a way that it is incumbent on a fixing bracket (12).

19. Method according to Claim 18, **characterised in that** after the swivel step, a portion of the package (2) is located below the fixing bracket (12), with said portion coming into contact with a removing conveyor belt (21).

## Revendications

1. Dispositif de remplissage comprenant :
une unité de remplissage pour remplir des emballages (2) avec un matériau de remplissage chaud,
une unité de fermeture pour fermer l'emballage (2), l'emballage (2) présentant une fermeture d'emballage (3, 4) pour ouvrir l'emballage (2) et
une unité de basculement (22) pour faire basculer l'emballage (2), de sorte que la fermeture d'emballage (3, 4) est en contact avec le matériau de remplissage chaud,
**caractérisé en ce que**
l'angle de basculement n'est pas supérieur à 160° et **en ce que**
l'unité (21) est conçue un peu comme une surface de transport (21), avec laquelle l'emballage (2) est gardé dans la position basculée, par exemple pendant qu'il est convoyé.

2. Dispositif selon la revendication 1, **caractérisé en ce que** l'unité de fermeture pour fermer le chapeau de fermeture (4) peut être posée sur l'emballage (2).

3. Dispositif selon l'une quelconque des revendications 1 à 2, **caractérisé en ce que** l'unité de fermeture permet de fermer une ouverture se trouvant à côté de la fermeture d'emballage (3, 4), par exemple par soudage de matériau de feuille de l'emballage (2).

4. Dispositif selon l'une quelconque des revendications 1 à 3, **caractérisé en ce que** l'unité de fermeture place une fermeture d'emballage (3, 4) ou bien une partie (3) de celle-ci dans une ouverture de l'emballage (2), par exemple par soudage.

5. Dispositif selon l'une quelconque des revendications 1 à 4, **caractérisé en ce que** l'unité de remplissage pour remplir l'emballage (2) est constituée d'une partie de la fermeture d'emballage (3).

6. Dispositif selon l'une quelconque des revendications 1 à 5, **caractérisé en ce que** l'unité de remplissage pour remplir l'emballage (2) est constituée d'une ouverture se trouvant à côté de la fermeture d'emballage (3, 4) ou au niveau de la position prévue de la fermeture d'emballage (3, 4).

7. Dispositif selon l'une quelconque des revendications 1 à 6, **caractérisé en ce que** l'unité (21) comprend un convoyeur à bande.

8. Dispositif selon l'une quelconque des revendications 1 à 7, **caractérisé en ce que** l'unité de basculement (22) fait basculer l'emballage (2) d'au moins 30°, 45°, 60°, 75°, 90°, 100°, 120°, 140° ou 150°.

9. Dispositif selon l'une quelconque des revendications 1 à 8, **caractérisé en ce que** l'unité de basculement (22) comprend une fourche de retenue (12).

10. Dispositif selon la revendication 9, **caractérisé en ce que** la fourche de retenue (12) se trouve en dessous de l'emballage (2) dans la position basculée.

11. Procédé de remplissage, dans lequel,
un emballage (2) est rempli avec un matériau de remplissage chaud,
l'emballage (2) est fermé,
l'emballage (2) présentant une fermeture d'emballage (3, 4) et
l'emballage (2) est basculé, de sorte que la fermeture d'emballage (3, 4) est en contact avec le matériau de remplissage chaud,
**caractérisé en ce que**
l'angle de basculement n'est pas supérieur à 160° et **en ce que**
l'emballage (2) est gardé, après le basculement, un certain temps dans cette orientation et est ainsi par exemple convoyé.

12. Procédé selon la revendication 11, **caractérisé en ce que,** pour la fermeture, un chapeau de fermeture (4) est posé sur l'emballage (2).

13. Procédé selon l'une quelconque des revendications 11 ou 12, **caractérisé en ce que** pour la fermeture, une ouverture se trouvant à côté de la fermeture d'emballage (3, 4) est fermée.

14. Procédé selon l'une quelconque des revendications 11 à 13, **caractérisé en ce que**, pour la fermeture, une fermeture d'emballage (3, 4) ou bien une partie (3) de celle-ci est placée dans une ouverture de l'emballage, par exemple par soudage.

15. Procédé selon l'une quelconque des revendications 11 à 14, **caractérisé en ce que** le matériau de remplissage est rempli à travers une partie (3) de la fermeture d'emballage.

16. Procédé selon l'une quelconque des revendications 11 à 15, **caractérisé en ce que** le matériau de remplissage est rempli à travers une ouverture se trouvant à côté de la fermeture d'emballage (3, 4) ou au niveau d'une position prévue de la fermeture d'emballage (3, 4).

17. Procédé selon l'une quelconque des revendications 11 à 16, **caractérisé en ce que** l'emballage (2) est basculé d'au moins 30°, 45°, 60°, 75°, 90°, 100°, 120°, 140° ou 150°.

18. Procédé selon l'une quelconque des revendications 11 à 17, **caractérisé en ce que** l'emballage (2) est basculé de telle sorte qu'il repose sur une fourche de retenue (12).

19. Procédé selon la revendication 18, **caractérisé en ce qu'**une partie de l'emballage (2) se trouve en dessous de la fourche de retenue (12) après le basculement, qui vient en contact avec un convoyeur à bande (21) effectuant le transport.
